Europäisches Patentamt

European Patent Office

Office européen des brevets

(11)     EP 0 988 130 B1

(19)

(12)     **FASCICULE DE BREVET EUROPEEN**

(45) Date de publication et mention
de la délivrance du brevet:
**04.10.2001 Bulletin 2001/40**

(51) Int Cl.⁷: **B23K 9/173**, B23K 35/30

(86) Numéro de dépôt international:
**PCT/FR98/00995**

(21) Numéro de dépôt: **98925742.3**

(22) Date de dépôt: **19.05.1998**

(87) Numéro de publication internationale:
**WO 98/56532 (17.12.1998 Gazette 1998/50)**

(54) **FIL FOURRE DE SOUDAGE A BASSE TENEUR EN AZOTE**

SCHWEISSFÜLLDRAHT MIT NIEDRIGEM STICKSTOFFSGEHALT

CORE WELDING WIRE WITH LOW NITROGEN CONTENT

(84) Etats contractants désignés:
**DE ES FR GB IT NL**

(30) Priorité: **09.06.1997 FR 9707118**

(43) Date de publication de la demande:
**29.03.2000 Bulletin 2000/13**

(73) Titulaire: **LA SOUDURE AUTOGENE FRANCAISE**
**F-75007 Paris (FR)**

(72) Inventeurs:
• **BONNET, Christian**
**F-95420 Saint-Gervais (FR)**
• **LEDUEY, Bruno**
**F-95550 Bessancourt (FR)**

(74) Mandataire: **Le Moenner, Gabriel et al**
**L'AIR LIQUIDE, Société Anonyme**
**pour l'étude et l'exploitation des procédés**
**Georges Claude**
**75, Quai d'Orsay**
**75321 Paris Cédex 07 (FR)**

(56) Documents cités:
**FR-A- 2 696 757          US-A- 4 091 147**
**US-A- 4 154 999**

• **PATENT ABSTRACTS OF JAPAN vol. 12, no. 61
(M-671), 24 février 1988 & JP 62 207598 A
(KAWAZAKI STEEL CORP), 11 septembre 1987**
• **PATENT ABSTRACTS OF JAPAN vol. 13, no. 77
(M-801), 22 février 1989 & JP 63 278697 A
(NIPPON STEEL CORP), 16 novembre 1988 cité
dans la demande**

**Description**

La présente invention se rapporte à un fil fourré pour le soudage avec protection par un flux gazeux, à un procédé de soudage MAG (pour Metal Active Gas), c'est-à-dire un procédé de soudage sous gaz utilisant un tel fil fusible, et à un joint de soudure obtenu par fusion dudit fil fusible.

Les fils fourrés utilisés pour le soudage avec protection gazeuse sont habituellement constitués d'une enveloppe métallique externe tubulaire, encore appelée feuillard, et d'une âme centrale comprenant des éléments de remplissage, par exemple une poudre métallique.

De tels fils fourrés sont utilisés dans de nombreuses procédures de soudage avec protection gazeuse, notamment dans le soudage des aciers de construction normalisés, TMCP (pour Thermo Mechanical Control Process) ou trempé-revenu.

Il existe actuellement trois types de fils fourrés utilisables pour le soudage sous flux gazeux de protection de pièces métalliques, notamment de pièces en acier de construction, à savoir les fils "basique", "rutile" et "sans laitier", encore appelés fils "metal cored". Ces différents fils fourrés se différencient par la nature des différents éléments qui les constituent.

Ainsi, selon le type de fil fourré utilisé dans le procédé de soudage, on obtient, par exemple, une fusion plus ou moins douce dudit fil fourré, un arc plus ou moins stable, un soudage en position plus ou moins facile, plus ou moins de projections de métal en fusion...

De même, selon le type de fil fourré utilisé dans le procédé de soudage et donc selon la nature et la teneur des différents éléments qui constituent ce fil fourré, on obtient une soudure, c'est-à-dire un métal déposé, ayant des propriétés métallurgiques très variables.

Ainsi, il est connu que les caractéristiques de la soudure dépendent de la teneur du métal déposé en ses différents éléments, tels notamment les éléments : oxygène, titane, niobium, vanadium, hydrogène...

A titre d'exemple, on a indiqué dans le Tableau I ci-après, d'une part, les principaux éléments entrant dans la constitution des 3 types différents de fils fourrés précités et, d'autre part, pour chacun d'entre eux, les conséquences opératoires et analytiques qui en découlent classiquement.

TABLEAU I

| TYPE DE FIL FOURRE | RUTILE | BASIQUE | SANS LAITIER |
|---|---|---|---|
| Eléments non métalliques dans le fil | $TiO_2$, $SiO_2$, $Al_2O_3$, Eléments ionisants | $CaF_2$, $CaCO_3$, MgO, Eléments ionisants | < 1%, Eléments ionisants |
| Eléments métalliques dans le fil | Désoxydants, Eléments d'alliage | Désoxydants, Eléments d'alliage | Désoxydants, Eléments d'alliage |
| Conséquences opératoires | . Fusion douce<br><br>. Arc stable<br><br>. Soudage facile en position<br><br>. Large domaine de transfert de métal par pulvérisation | . Transfert globulaire<br><br>. Projections<br><br>. Soudage difficile en position | . Fusion douce<br><br>. Arc stable |
| Teneur du métal déposé (soudure) | $O_2$: 600-1000 ppm<br><br>Ti: 300-800 ppm<br><br>Nb: 100-300 ppm<br><br>V : 50-250 ppm<br><br>$H_2$: 4 à 15 ml | $O_2$: 300-400 ppm<br><br>Ti: ajustable<br><br>Nb: ajustable<br><br>V : ajustable<br><br>$H_2$: < 5 ml | $O_2$: 600-1000 ppm<br><br>Ti: ajustable<br><br>Nb: ajustable<br><br>V : ajustable<br><br>$H_2$: 1 à 6 ml |

Il ressort du tableau I précédent que les fils fourrés de type "rutile", à base d'oxyde de titane ($TiO_2$), présentent de meilleures propriétés opératoires que les autres types de fils: très bonne stabilité d'arc, régime de transfert de métal par pulvérisation axiale pour une large gamme de paramètres se traduisant par une quasi-absence de projections lors du soudage, laitier à haut point de fusion autorisant un fort taux de dépôt lors du soudage en position...

Toutefois, de par la composition de son laitier, c'est-à-dire des éléments de remplissage qui composent son âme centrale, le fil fourré de type "rutile" présente l'inconvénient de conduire à une soudure contenant des éléments résiduels (oxygène, niobium, vanadium...) tendant à s'opposer à l'obtention de propriétés mécaniques optimales du métal déposé, c'est-à-dire de la soudure.

Plus précisément, la teneur en oxygène du métal déposé, bien que pouvant varier selon la nature et la quantité d'éléments désoxydants présents dans la poudre de remplissage, ne peut pas être abaissée à un niveau aussi faible pour les fils de type "rutile" que, par exemple, pour les fils de type "basique".

Il s'ensuit qu'une soudure effectuée avec un fil de type "rutile" présente une énergie de rupture ductile plus faible due à un taux inclusionaire plus élevé.

De même, le laitier de fil de type "rutile" étant majoritairement composé de rutile, c'est-à-dire d'oxyde de titane $(TiO_2)$, on trouve inévitablement du titane dans le métal déposé et ce, en quantité variable en fonction, notamment, des réactions d'oxydo-réduction se produisant dans l'arc et des échanges métal-laitier ayant lieu au niveau du bain liquide, c'est-à-dire du métal en fusion.

La teneur en titane du métal déposé ne peut donc pas être ajustée à volonté, mais dépend étroitement de l'ensemble des éléments chimiques présents, lesquels doivent être équilibrés en fonction des caractéristiques mécaniques (résistance à la traction, limite d'élasticité...) que doit avoir la soudure, qui dépendent elles-mêmes du type d'acier que l'on a à souder.

En outre, les teneurs en niobium et vanadium du métal déposé ne peuvent pas non plus, quant à elles, être abaissées en dessous d'un certain seuil, étant donné que ces éléments existent en tant qu'impuretés dans les oxydes de titane naturels habituellement utilisés pour fabriquer les produits de soudage.

L'utilisation d'oxyde de titane synthétique, donc relativement pur, permet de résoudre en partie ce problème, mais au détriment d'une augmentation significative du coût du fil fourré et au prix d'une complexité plus grande du procédé de fabrication de celui-ci.

Les nombreuses recherches menées dans le but d'améliorer les propriétés métallurgiques des fils fourrés de type "rutile" ont abouti aux fils fourrés à effet "titane-bore".

Plus précisément, il a été mis en évidence que la présence d'une très faible quantité de bore, en général de 20 à 60 ppm dans le métal déposé, permettait de retarder considérablement l'apparition de ferrite proeutectoïde aux joints des grains austénitiques, lors du refroidissement du dépôt de soudure.

Ainsi, la transformation de l'austénite peut se produire par germination intragranulaire de ferrite sur les fines inclusions, toujours présentes dans une soudure, à condition que celles-ci contiennent une certaine quantité de titane.

Une structure comportant des grains de ferrite très fins est habituellement appelée "ferrite aciculaire"; elle présente des propriétés améliorées de traction (résistance à la rupture, limite d'élasticité...) et de ténacité (résilience Charpy-V, CTOD...).

En d'autres termes, l'effet titane-bore permet d'éviter lors du refroidissement de la soudure, la formation de ferrite proeutectoïde grossière très préjudiciable pour la ténacité de la soudure et d'obtenir finalement une structure de type ferrite aciculaire en rendant, par la même, les soudures effectuées avec des fils de type rutile (mais aussi de type sans laitier) compatibles à l'état brut de soudage avec les exigences industrielles les plus sévères, lesquelles ne pouvaient être satisfaites par les fils de type basique.

Toutefois, si les résultats obtenus sont satisfaisants à l'état brut de soudage, il n'en va pas de même lorsque la soudure subit un traitement thermique post-soudage nécessaire notamment pour détentionner la construction, notamment dans le cas d'assemblage de forte épaisseur.

En effet, il a été observé qu'une soudure réalisée au moyen d'un fil rutile "titane-bore" et ayant été soumise à un traitement thermique subséquent perdait ses propriétés métallurgiques, donc le bénéfice apporté par l'effet "titane-bore".

De là, plusieurs publications rapportent des essais portant sur la formulation des poudres de remplissage des fils fourrés, en particulier de type 'rutile', lesquelles visaient à améliorer le comportement des soudures après traitement thermique post-soudage.

En outre, parmi les différents éléments que l'on retrouve dans les fils fourrés, il convient de citer l'azote.

Ainsi, le document JP-A-63220996 enseigne un fil fourré dont l'enveloppe contient 220 ppm d'azote.

En outre, le documents JP-A-63278697 décrit un fil fourré contenant 1-12% de fluorure de métal, 0.1-1.5% de carbonate de métal, 0.2-3% d'un ou plusieurs silicates minéraux et chlorures de silice, 0.2-2% de silice, 1-2.5% de manganèse, 0.05-0.3% de titane et 0.1-1% de magnésium; le poids du flux de remplissage représentant de 10 à 30% du poids total du fil fourré.

Par ailleurs, le document I.S.I.J. INTERNATIONAL, VOL. 35, 1995, VO 10 enseigne, par ailleurs, que l'on améliore la résilience de la soudure à basse température en augmentant la teneur en azote jusqu'à atteindre des valeurs préférées de l'ordre de 80 ppm.

Toutefois, actuellement, aucun des fils fourrés existants, en particulier de type rutile, ne permet d'obtenir une soudure présentant de bonnes caractéristiques de ténacité et de résilience après traitement thermique post-soudage.

Un des buts de la présente invention est donc de résoudre le problème susmentionné et de fournir un fil fourré, en particulier de type rutile ou sans laitier, pour le soudage avec protection gazeuse, notamment des aciers de construction, tels les aciers normalisés TMCP ou trempé-revenu, permettant d'obtenir une soudure présentant d'excellentes propriétés de ténacité à basse température et de résilience, tant à l'état brut de soudage qu'après un traitement thermique de détensionnement.

Un autre objectif est de fournir un fil fourré permettant d'obtenir une soudure fiable et homogène, c'est-à-dire présentant les mêmes caractéristiques dans toutes les zones du métal fondu de la soudure, en particulier pour une soudure multi-passes.

De manière générale, les propriétés d'une soudure dépendent des différents éléments composant la soudure et de leurs proportions respectives les uns par rapport aux autres, étant donné que ces éléments peuvent avoir, selon le cas, des actions intrinsèques indépendemment les uns des autres ou des actions combinées les uns aux autres, notamment de type synergique ou, à l'inverse, de type antagoniste.

Ainsi, dans la majorité des cas, la présence d'un élément particulier dans le fil et/ou le métal déposé a une influence positive sur certaines caractéristiques mécaniques de la soudure qui en résulte et une influence négative sur d'autres caractéristiques.

Dès lors, trouver une formulation de fil fourré adéquate n'est pas chose aisée lorsque l'on souhaite équilibrer l'analyse du joint de soudure, c'est-à-dire du métal déposé, pour obtenir une soudure ayant des propriétés mécaniques optimales pour une application donnée, telles la résistance et la ténacité.

En outre, il est également nécessaire, voire indispensable, de prendre en compte également les paramètres opératoires. En effet, on comprend aisément qu'un fil fourré permettant d'obtenir un bon compromis métallurgique ne sert à rien si la formulation, c'est-à-dire sa composition, mise en oeuvre pour le fabriquer le rend très difficile à utiliser sur le plan opératoire.

Ainsi, les fils fourrés de type basique sont réputés avoir un potentiel métallurgique très supérieur aux fils fourrés de type rutile, mais présentent, par contre, des caractéristiques opératoires très inférieures à celles desdits fils rutiles, notamment en termes de stabilité d'arc, de taux de projections, de productivité lors du soudage en position....

Il en résulte alors une disparition progressive de ce type de fils fourrés du marché au fur et à mesure que les propriétés métallurgiques des fils fourrés rutiles progressent et s'améliorent.

Dès lors, il existe un réel besoin pour des fils fourrés qui soient acceptables non seulement du point de vue de leurs propriétés métallurgiques, mais aussi du point de vue de leurs propriétés opératoires; ce problème n'ayant jusque-là pas ou seulement partiellement résolu.

Confrontés à ce problème, les inventeurs de la présente invention ont mis en évidence que la teneur totale du fil fourré en certains éléments de base, notamment l'azote, du métal déposé jouait, de façon surprenante, un rôle essentiel sur la qualité et les propriétés de la soudure, notamment sur sa ténacité et sa résilience.

Plus précisément, les inventeurs ont découvert que pour obtenir une soudure de qualité, en particulier après un traitement de détensionnement de la structure soudée ainsi obtenue, il est nécessaire d'avoir, d'une part, une basse teneur en azote dans le métal déposé et, d'autre part, une teneur déterminée en les autres constituants susceptibles de s'y trouver, tels notamment l'aluminium, le bore, le niobium, le vanadium, le manganèse, le titane, le carbone, le nickel, le chrome et, en particulier l'aluminium et le titane....

La présente invention concerne alors un fil fourré pour le soudage, de préférence MAG, sous flux gazeux de protection, comportant au moins une enveloppe métallique externe et au moins une âme centrale comprenant des éléments de remplissage, caractérisé en ce qu'il contient par rapport au poids total dudit fil fourré :

- moins de 75 ppm d'azote, de préférence moins de 60 ppm d'azote, avantageusement moins de 50 ppm d'azote,
- de 0.1 % à 1 % de silicium, de préférence de 0.2 % à 0.9 % de silicium, avantageusement de 0.25 % à 0.75 % de silicium,
- de 1 % à 2.5 % de manganèse, de préférence de 1.2 % à 2 % de manganèse, avantageusement de 1.4 % à 1.8 % de manganèse,
- moins de 7% de titane,
- de 1 ppm à 110 ppm de bore, de préférence de 20 ppm à 90 ppm de bore, de préférence de 25 ppm à 70 ppm ou 80 ppm de bore,
- moins de 0.3% d'aluminium, de préférence de 1 ppm à 0.2% d'aluminium, avantageusement de 5 ppm à 0.1% d'aluminium,
- de 10 ppm à 200 ppm de niobium, de préférence de 10 ppm à 130 ppm de niobium, de préférence de 10 ppm à 100 ppm de niobium, et
- de 10 ppm à 200 ppm de vanadium, de préférence de 10 ppm à 130 ppm de vanadium, de préférence de 10 ppm à 100 ppm de vanadium.

Dans le cadre de l'invention, on considère que la teneur totale en un élément donné d'un fil fourré, par exemple l'azote, est égale à la somme des teneurs en ledit élément donné, par exemple l'azote, des différents constituants du fil fourré, à savoir, d'une part, de l'enveloppe et, d'autre part, des différents éléments de remplissage.

Ainsi pour l'azote par exemple, la teneur totale en azote ($N_2$) peut être déterminée en appliquant la formule (I) suivante:

$$[N_2]_T = (1 - t).[N_2]_e + \sum_{i=1}^{i=n} [N_2]_i.[i].t \qquad (I)$$

dans laquelle :

- [$N_2]_T$ représente la teneur totale (ppm en poids) en azote du fil fourré;
- t représente le taux de remplissage du fil fourré et est donné par la formule (II) suivante :

$$t = \frac{\text{Poids des éléments de remplissage}}{\text{Poids éléments remplissage + Poids enveloppe}} \qquad (II);$$

- [$N_2]_e$ représente la teneur en azote (ppm en poids) de l'enveloppe métallique du fil fourré;
- n représente le nombre de produits élémentaires i constituants les éléments de remplissage et susceptibles de contenir de l'azote;
- [$N_2]_i$ représente la teneur en azote (ppm en poids) de chaque produit élémentaire i; et
- [i] représente la proportion de chaque produit i par rapport au poids total d'éléments de remplissage.

Bien entendu, les teneurs totales respectives de chacun des autres éléments constituant le fil fourré peuvent être déterminées de manière similaire.
Selon le cas, le fil fourré selon l'invention peut contenir :

- de 300 ppm à 0.14 % de carbone (hors carbonates), de préférence de 0.03 à 0.1% de carbone, de préférence de 0.03% à 0.08% de carbone, et/ou
- de 0.2% à 1% de magnésium et/ou zirconium, de préférence de 0.3% à 0.9% de magnésium et/ou zirconium (Zr), de préférence de 0.4% à 0.8% de magnésium et/ou zirconium, et/ou
- de 0.01% à 0.35% de sodium, potassium et/ou lithium (on considère ici la somme des teneurs en les éléments Li, Na et K éventuellement présents), de préférence de 0.03% à 0.3% de sodium (Na), potassium (K) et/ou lithium (Li), de préférence de 0.04% à 0.25% de sodium, potassium et/ou lithium, et/ou
- de 0.03% à 10% de fluor (F), lequel a une action favorable sur l'hydrogène diffusible et/ou
- moins de 0.02% de soufre, de phosphore, d'étain, d'antimoine et/ou d'arsenic, (on considère ici les teneurs respectives en les éléments S, P, Sn, Sb et As éventuellement présents et non la somme des teneurs en lesdits différents éléments), de préférence de 1 ppm à 0.012% de soufre, de phosphore, d'étain, d'antimoine et/ou d'arsenic, préférentiellement de 10 ppm à 0.009%.

En outre, le fil fourré de l'invention présente un coefficient de Bruscato (X) tel que :

$$X = 0.1 . [P] + 0.05 . [Sb] + 0.04 . [As] + 0.01 . [Sn]$$

avec X < 20 ppm, de préférence, X<15 ppm, avantageusement X<12 ppm,
où [P], [Sb], [As] et [Sn] sont les proportions totales (en ppm) de phosphore, antimoine, arsenic et étain, respectivement, dans le fil fourré.
En général, l'enveloppe externe représente au moins 50% du poids total du fil fourré, de préférence de 65 à 90% du poids total du fil fourré.
Par ailleurs, le diamètre du fil fourré est habituellement compris entre 0,8 mm et 2,4 mm, de préférence entre 1 et 2 mm, avantageusement entre environ 1,20 et environ 1,60.
Selon le mode de réalisation choisi ou l'application subséquente considérée, le fil fourré est préférentiellement de type rutile ($TiO_2$) ou de type "sans laitier".
Pour un fil de type rutile, la teneur en $TiO_2$ du fil peut varier entre 3 et 12%, ce qui correspond à une teneur en titane de 2% et 7% environ. En outre, la teneur en fluor des fils fourrés rutile peut varier entre 0.03% et 0.15%, de préférence entre 0.05% et 0.09%.

Pour un fil de type "sans laitier" ou pour un fil de type "basique", la teneur en titane est de 80 ppm à 2000 ppm environ, de préférence de 100 à 1000 ppm, avantageusement de 110 à 500 ppm.

Par contre, la teneur en fluor des fils fourrés "sans laitier" peut varier entre 0.02% et 0.15%, de préférence entre 0.035% et 0.09%, alors que pour un fil de type "basique", la teneur en fluor peut varier entre 1.6 à 10%, de par la présence de Spath-fluor ($CaF_2$).

La présente invention concerne également un procédé de soudage MAG sous flux gazeux de protection, dans lequel on réalise un joint de soudure par fusion d'au moins une partie d'un fil fourré selon l'invention, de préférence la fusion du fil est obtenue par mise en oeuvre d'une énergie de soudage comprise entre 6 et 40 kJ.cm$^{-1}$.

De là, l'invention concerne aussi un tel joint de soudure susceptible d'être obtenu par le procédé de l'invention, notamment un joint de soudure ou du métal déposé contenant, par rapport au poids total du joint de soudure moins de 80 ppm d'azote, de 0.02 % à 0.07 % d'oxygène, de 0.02% à 0.12 % de carbone, de 0.15 % à 0.6 % de silicium, de 1 % à 1,9 % de manganèse, moins de 0.02 % de soufre, moins de 0.02 % de phosphore, de 0.0025 % à 0.08 % de titane, de 0.0002% à 0.008% de bore, moins de 0.03 % d'aluminium, préférentiellement de 5 ppm à 150 ppm d'aluminium, de 10 ppm à 0.02 % de niobium, et de 10 ppm à 0.02 % de vanadium.

Le carbone (C) est un des éléments de base des aciers qui conditionne les caractéristiques de traction et de dureté des diverses microstructures. De là, pour obtenir un joint de soudure présentant une résistance élevée à la traction, il est souhaitable que la proportion de carbone dans le joint de soudure soit égale à une valeur relativement élevée. Toutefois, il convient de ne pas dépasser une valeur maximale de 0.12% en poids car au-delà, les risques de fissuration à chaud et à froid augmentent fortement. Par ailleurs, étant donné que le carbone joue aussi un rôle de désoxydant, il convient de respecter une teneur minimale en carbone dans le joint de soudure d'au moins 0.02% en poids, de manière à permettre élimination efficace d'une partie de l'oxygène et obtenir ainsi une ténacité correcte du joint de soudure.

Le silicium (Si) est, comme le carbone, un désoxydant permettant de garantir une bonne ténacité du joint de soudure et a, par ailleurs, des effets bénéfiques sur le mouillage des cordons de soudure, à partir d'une proportion minimale en poids de 0.15%. Cependant, le silicium a aussi un effet durcissant très marqué dans les diverses microstructures et engendre une augmentation de la proportion des constituants martensitique et austénitique du joint de soudure. Or, ceux-ci ont des effets néfastes sur la ténacité du joint de soudure. Il s'ensuit alors qu'il est nécessaire d'observer une teneur maximale en silicium de 0.6% en poids.

Le manganèse (Mn) est également un des éléments de base des aciers. Afin de permettre l'apparition d'une quantité substantielle de ferrite aciculaire dans les zones à structure brute de solidification et améliorer leur ténacité, il est nécessaire de respecter une teneur minimale de 0.9% en poids de manganèse dans le joint de soudure. A partir de cette valeur de teneur minimale de 0.9%, le manganèse joue un rôle fondamental dans l'ajustage de la trempabilité du métal fondu aux cycles thermiques de soudage et, par là-même, de la quantité de ferrite aciculaire formée pendant le processus de refroidissement du joint de soudure en fonction de l'énergie de soudage devant être mise en oeuvre dans l'application envisagée. Toutefois, il convient de maintenir une teneur en manganèse inférieure à 1.9% en poids, étant donné, qu'au-delà, un effet durcissant néfaste du manganèse l'emporte sur son effet bénéfique d'affinement de la microstructure du joint de soudure et la ténacité s'en trouve alors globalement détériorée.

Le soufre (S), quant à lui, augmente considérablement les risques de fissuration à chaud du joint de soudure, lorsque sa teneur dans le métal déposé est supérieure à 0.020%. Par ailleurs, le soufre à aussi un effet néfaste sur les caractéristiques de ductilité et de ténacité de la soudure. Dès lors, on préfère maintenir le soufre en une proportion maximale d'au plus 0.010%.

Le phosphore (P) a, comme le soufre, mais dans une moindre mesure, un effet négatif sur la fissuration à chaud du joint de soudure, lorsque sa teneur dans le métal déposé est supérieure à 0.020%. En outre, au cours du processus de refroidissement consécutif à un traitement thermique post-soudage, la présence de phosphore augmente la fragilisation des zones de soudure ayant conservé une structure brute de solidification. Dès lors, on préfère, là aussi, maintenir le phosphore en une proportion maximale d'au plus 0.010%.

Le titane (Ti) doit être présent en une teneur minimale de 0.0025% en poids pour assurer la germination de la ferrite aciculaire, qui est un microconstituant indispensable à l'obtention d'une ténacité correcte dans les zones de soudure à structure brute de solidification. Au-delà de 0.080% en poids, le titane a, par contre, tendance à contribuer à la formation d'une structure bainitique détériorant la ténacité.

Le bore (B) ralentit la cinétique de formation de la ferrite proeutectoïde aux joints des grains austénitiques lors du refroidissement des cordons de soudure. De ce fait, le bore permet, en présence de titane, d'augmenter la proportion de ferrite aciculaire et donc d'améliorer la ténacité de la soudure à partir d'une teneur totale de 0.0003% (3 ppm) en poids et ce, jusqu'à une teneur de 0.008% en poids (80 ppm). Par contre, au-delà de 0.008%, le bore augmente les risques de fissuration à chaud, ce qui n'est pas acceptable. En général, on respecte une teneur en bore de 10 ppm à 70 ppm, de préférence entre 20 ppm et 60 ppm.

Le niobium (Nb) et le vanadium (V) contribuent, en présence de titane, à augmenter la proportion de ferrite aciculaire et donc les caractéristiques de ténacité du joint de soudure, pour une valeur minimale de 0.001% en poids. Toutefois, ces composés présentent aussi une forte affinité avec l'azote et le carbone, si bien qu'ils vont précipiter sous forme de carbures, nitrures ou carbonitrures dans les zones du joint de soudure réchauffées lors de l'exécution de passes de soudage successives, ainsi que dans toutes les zones au cours d'un traitement thermique post-soudage et ce, avec encore plus d'intensité. Il est donc indispensable de limiter leurs teneurs respectives à au plus 0.02%, de préférence au plus 0.01%.

Comme expliqué ci-avant, l'azote (N) a, en solution solide ou à l'état de précipités, un effet fragilisant dans les joint de soudure des aciers de constructions normalisés, TMCP ou Trempé-Revenu. Dès lors, on maintient sa teneur totale dans le métal déposé à au plus 80 ppm, de préférence à au plus 60 ppm, avantageusement à au plus 50 ppm.

Dans les tôles d'aciers, l'aluminium (Al) est souvent ajouté, d'une part, à des fins de calmage, c'est-à-dire de fixation de l'oxygène sous forme d'aluminates, et, d'autre part, afin de minimiser l'effet néfaste de l'azote en le piégeant sous forme de nitrures. Dès lors, on prend soin habituellement d'ajuster la teneur en aluminium dans lesdites tôles, tel que le rapport des teneurs Al/N soit supérieur à 4. Or, il n'en va pas de même dans les soudures de ces aciers. En effet, il s'avère que réaliser un joint de soudure avec un tel rapport Al/N>4, conduit à une dégradation catastrophique des caractéristiques de ténacité du joint de soudure car observer un tel rapport de teneurs conduit inévitablement à annihiler au moins partiellement la formation de ferrite aciculaire et à augmenter exagérément la teneur en titane dans les joints de soudure réalisés avec des fils fourrés de type rutile ($TiO_2$) engendrant par là-même une amplification de la diminution de la formation de ferrite aciculaire bénéfique au profit de formation de micro-constituants de type bainitique indésirables. Il s'ensuit alors que la teneur totale en aluminium doit être maintenue à une valeur inférieure à 0.030% en poids, de préférence inférieure à 0.015% en poids, de préférence inférieure à 0.010% en poids. En outre, il est souhaitable d'observer un rapport de teneurs Al/N<4, de préférence Al/N<3, préférentiellement encore Al/N<2, avantageusement Al/N<1.5.

Les aciéristes cherchent, en général, à diminuer au maximum la teneur en oxygène ($O_2$) des aciers car l'oxygène tend à réduire les caractéristiques de ténacité et de ductilité des aciers de par la formation d'inclusions au sein de ceux-ci. Contrairement à cela, une teneur en oxygène dans les soudures d'au moins 0.02% en poids s'avère indispensable pour permettre, en association avec le titane, la formation d'inclusions fines et dispersées servant de germes ou d'amorces à la ferrite aciculaire et obtenir ainsi une bonne ténacité dans les zones de soudure à structure brute de solidification. Cependant, il convient de respecter une teneur maximale en oxygène de l'ordre de 0.07%, de préférence une teneur maximale de 0.06%, voire de 0.055%, pour éviter une diminution significative de l'énergie de rupture ductile au niveau du joint de soudure, comme cela est connu pour les aciers.

On considère, dans le cadre de la présente invention, que la teneur en azote du métal déposé est sensiblement égale à celle du fil fourré utilisé pour réaliser la soudure. Toutefois, lorsque la protection gazeuse mis en oeuvre durant l'opération de soudage est imparfaite, on observe parfois une légère contamination du métal déposé par de l'azote atmosphérique. Néanmoins, dans le cas présent, on considère que la protection gazeuse est quasi-parfaite et donc qu'une telle contamination du métal déposé par de l'azote atmosphérique ne se produit pas. En d'autres termes, dans un souci de simplification, on considère que la totalité de l'azote présent dans la soudure, c'est-à-dire dans le métal déposé, provient essentiellement du fil fourré utilisé pour réaliser la soudure

En outre, le joint de soudure selon l'invention peut également comporter jusqu'à 3.5% de nickel, jusqu'à 0.5% de chrome, jusqu'à 0.7% de molybdène et/ou jusqu'à 0.6% de cuivre.

En effet, le nickel (Ni) augmente au moins légèrement la dureté et les propriétés de traction des diverses microstructures en entrant, en solution solide, dans le réseau du fer. Il est à noter que cet effet favorable du nickel ne s'accompagne pas d'une détérioration de la ductilité et de la ténacité de ces microstructures. Cependant, on préfère maintenir la teneur en nickel en-dessous de 3.5% en poids pour éviter une fissuration à chaud du joint de soudure.

En outre, le molybdène (Mo) est un élément améliorant la trempabilité des aciers. Son pouvoir durcissant par effet de solution solide est également notable. De là, on préconise sa présence dans le joint de soudure pour les applications impliquant une énergie de soudage élevée, par exemple 20 à 50 kJ/cm, nécessitant une bonne tenue à chaud de l'acier, par exemple à 250° ou à 350°C, ou lorsque l'assemblage concerne un acier à haute ou très haute élasticité, par exemple 500 à 900 MPa. Cependant, on préfère maintenir la teneur en molybdène en-dessous de 0.7% en poids pour éviter une diminution de la ténacité du joint de soudure.

Le chrome (Cr), comme le molybdène, peut être ajouté pour améliorer les caractéristiques de traction et de dureté du joint de soudure, en particulier d'aciers à haute ou très haute élasticité. Cependant, on préfère maintenir la teneur en chrome en-dessous de 0.5% en poids, voire même en-dessous de 0.3% en poids, pour éviter une diminution, là encore, de la ténacité du joint de soudure.

Le cuivre (Cu) peut être additionné dans le métal fondu pour améliorer la résistance à la corrosion atmosphérique, jusqu'à des teneurs de l'ordre de 0.6% en poids.

Par ailleurs, le joint de soudure peut comporter du phosphore, de l'antimoine, de l'arsenic et/ou de l'étain et présenter un coefficient de Bruscato (X) tel que :

$$X = 0.1 \times [P] + 0.05 \times [Sb] + 0.04 \times [As] + 0.01 \times [Sn]$$

avec X < 20 ppm, de préférence X < 15 ppm,

où [P], [Sb], [As] et [Sn] sont les proportions totales (en ppm) de phosphore, antimoine, arsenic et étain, respectivement, dans ledit joint de soudure.

L'invention concerne, en outre, une pièce en acier comportant un joint de soudure tel décrit ci-avant.

Avantageusement, le fil fourré de l'invention est utilisé pour la construction d'installations liées à l'industrie pétrolière, telle une plate-forme pétrolière offshore ou une cuve de stockage, ou pour la construction de bateaux.

L'invention va maintenant être illustrée à l'aide d'exemples et en références aux figures annexées, lesquels sont donnés à titre illustratif mais non limitatif.

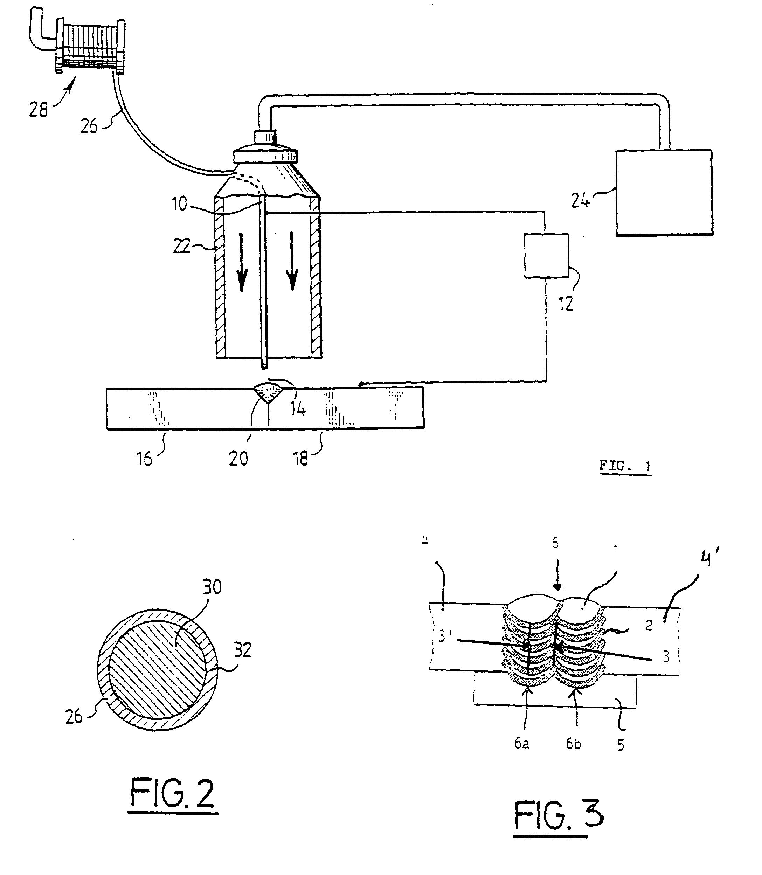

La figure 1 est une vue schématique générale d'une installation de soudage MAG sous flux gazeux de protection conforme à l'invention, laquelle comporte un fil fourré 26 relié à une source de courant 12 appropriée pour provoquer l'émission d'un arc électrique 14 entre une extrémité libre du fil fourré 26 et une zone de contact entre des pièces à souder 16 et 18.

Le fil fourré 26 est disposé dans une buse 22, dans laquelle circule un gaz de protection oxydant, tel que le mélange argon/$CO_2$ commercialisé par la société L'AIR LIQUIDE sous la référence ATAL 5™ ou tout mélange gazeux compatible avec le procédé de soudage MAG considéré, délivré par une source de gaz externe 24, afin d'isoler le fil fourré 26 et le bain 20 de métal déposé de l'atmosphère ambiante. Le fil fourré 26 est alimenté en continu à partir d'une bobine d'alimentation 28.

On voit sur la figure 2 que le fil fourré 26 comporte une âme centrale 30 disposée dans une enveloppe métallique externe 32.

L'enveloppe métallique 32 est constitué d'acier doux ou faiblement allié et les pièces 16 et 18 à souder sont constituées d'acier de construction.

En particulier, les conditions de soudage suivantes peuvent être appliquées: intensité de soudage: 250 ampères, tension de soudage: 27 volts, énergie de soudage: 17,6 kJ/cm et vitesse de soudage: 23 cm/mn.

Exemples

Les essais ci-après ont été réalisés par dépôts successifs de métal fondu en deux passes par couche sur des pièces-test ou échantillons métalliques, c'est-à-dire conformément aux normes françaises, américaines et japonaises; ceci est représenté sur la figure 3.

La teneur en azote et en les autres éléments du métal déposé, donc du joint de soudure, dépend de la teneur en azote et en ses éléments du fil fourré utilisé.

Des fils fourrés de différentes compositions ont été étudiés, notamment des fils de types "rutile".

Plus précisément sur la figure 3 est représentée une pièce-test comportant trois parties 4, 4' et 5, reliées entre elles par un joint 6 de soudure réalisé par dépôt de métal fondu en deux passes 6a et 6b par couche.

Le joint 6 soudé présente des zones recuites 2 (zones sombres), c'est-à-dire des zones ayant été réchauffées au-delà du point de transformation en austénite lors de l'exécution d'une passe subséquente, et des zones brutes 1 (zones claires), c'est-à-dire ayant conservées une structure métallique brute de solidification.

Actuellement, les normes en vigueur imposent, pour caractériser les produits de soudage, de prélever les résiliences en positionnant l'entaille axialement, c'est-à-dire selon la ligne 3 de la soudure, dans une zone dont la structure métallurgique a été recuite par exécution des passes successives.

Toutefois, en pratique, on a observé que les caractéristiques de ténacité et de résilience sont, en général, plus faibles, donc moins bonnes, lorsque l'entaille est réalisée dans l'axe de passage dans les zones brutes (non-recuites), c'est-à-dire selon la ligne 3' de la figure 3, ce qui influe négativement sur la solidité de l'ouvrage réalisé, par exemples une plate-forme offshore, un pont, une cuve ou un bateau.

Dans les exemples suivants, les entailles de résiliences ont donc été prélevées non seulement dans les zones recuites (ligne 3), mais aussi dans les zones brutes (ligne 3').

Dans tous les exemples ci-après, le traitement de détensionnement est effectué à 580°C pendant 3h.

Exemple 1

Les dépôts de métal fondu ont été exécutés au moyen de fils fourrés de type rutile à effet titane-bore (TGS F6.56 1 Ni1 selon la norme AFNOR ou E 81 T1 Ni1 selon la norme AWS) fabriqués à partir d'une même formule de base, mais se distinguant ici notamment par leur teneur en azote.

Des éprouvettes de résilience ont été prélevées dans les zones à structure recuite et, à titre comparatif, dans les zones brutes de soudage ayant conservé une structure brute de solidification.

Les teneurs des constituants principaux du métal déposé (soudure) ont été déterminées et sont données dans le tableau II ci-après.

TABLEAU II

| Essai n° | C % | Si % | Mn % | S % | P % | Ni % | Al % | Nb % | V % | Ti % | B ppm | O ppm | N ppm |
|---|---|---|---|---|---|---|---|---|---|---|---|---|---|
| A | 0,058 | 0,32 | 1,15 | 0,005 | 0,006 | 0,69 | 0,003 | 0,010 | 0,014 | 0,035 | 29 | 460 | 63 |
| B | 0,059 | 0,32 | 1,16 | 0,004 | 0,006 | 0,78 | 0,003 | 0,010 | 0,016 | 0,031 | 28 | 420 | 72 |
| C | 0,060 | 0,31 | 1,14 | 0,005 | 0,006 | 0,74 | 0,002 | 0,011 | 0,016 | 0,028 | 23 | 460 | 150 |

En outre, les résiliences à -40°C, c'est-à-dire les valeurs représentant la résistance au choc de la soudure, des zones brutes et des zones recuites des différentes éprouvettes (essais A à C) avant (état brut de soudage) et après traitement thermique post-soudage (détensionnement à 580°C pendant 3 h) sont données dans le tableau III ci-après.

TABLEAU III

| Essai n° | Etat brut de soudage kV (J) | | | | Etat détensionné kV (J) | | | |
|---|---|---|---|---|---|---|---|---|
| | zones recuites | | zones brutes | | zones recuites | | zones brutes | |
| | moyenne | minimale | moyenne | minimale | moyenne | minimale | moyenne | minimale |
| A | 103 | 97 | 118 | 101 | 84 | 66 | 89 | 64 |
| B | 124 | 98 | 46 | 45 | 53 | 27 | 50 | 36 |
| C | 64 | 44 | 19 | 18 | 52 | 32 | 23 | 18 |

Les résultats obtenus montrent clairement qu'à l'état brut de soudage et si l'on ne considère que les zones recuites, les résiliences moyennes mesurées sont bonnes pour les éprouvettes A et B (soudures contenant 63 ppm et 72 pmm d'azote respectivement), et acceptable pour l'éprouvette C (fil contenant 150 ppm d'azote). Toutefois, en considérant également les zones brutes à l'état brut de soudage, on constate que seule l'éprouvette A présente une bonne valeur de résilience.

Après traitement thermique de détensionnement, seule l'éprouvette A (fil contenant 63 ppm d'azote) présente une résilience admissible. On constate, néanmoins, que ces valeurs sont inférieures de plus de 22% à celle obtenues à l'état brut de soudage et ce, quelle que soit la zone considérée (recuite ou brute).

Cet exemple 1 montre clairement l'intérêt d'une diminution de la teneur en azote du fil fourré sur la résilience de la soudure, en particulier lorsque celle-ci doit subir un détensionnement post-soudage.

Exemple 2

L'exemple 2 est analogue à l'exemple 1, à l'exception du fait que les fils fourrés utilisés ici ont des teneurs :

- en azote s'échelonnant entre 88 ppm et 39 ppm, et
- en éléments formateurs de nitrures ou carbonitrures, en particulier niobium (Nb) et vanadium (V), inférieures d'environ 40% à 50 % à celles des fils fourrés de l'exemple 1.

Comme précédemment, les teneurs des constituants principaux du métal déposé (soudure) ont été déterminées et sont données dans le Tableau IV ci-après.

TABLEAU IV

| Essai n° | C % | Si % | Mn % | S % | P % | Ni % | Al % | Nb % | V % | Ti % | B ppm | O ppm | N ppm |
|---|---|---|---|---|---|---|---|---|---|---|---|---|---|
| D | 0,070 | 0,35 | 1,39 | 0,006 | 0,007 | 0,65 | 0,003 | 0,006 | 0,008 | 0,046 | 40 | 400 | 39 |
| E | 0,066 | 0,31 | 1,29 | 0,007 | 0,007 | 0,70 | 0,002 | 0,006 | 0,007 | 0,033 | 33 | 430 | 63 |
| F | 0,062 | 0,30 | 1,26 | 0.006 | 0,007 | 0,68 | 0,003 | 0,005 | 0,007 | 0,031 | 28 | 440 | 88 |

En outre, les résiliences de chacune des éprouvettes (essais D à F) ont été mesurées non seulement à -40°C, mais aussi à -60°C et sont, respectivement, reportées dans les Tableaux V et VI suivants.

TABLEAU V :

| Essai n° | \multicolumn{4}{}{Résiliences à -40°C} |
|---|---|---|---|---|---|---|---|---|

| Essai n° | Etat brut de soudage kV(J) | | | | Etat détensionné kV (J) | | | |
|---|---|---|---|---|---|---|---|---|
| | zones recuites | | zones brutes | | zones recuites | | zones brutes | |
| | moyenne | minimale | moyenne | minimale | moyenne | minimale | moyenne | minimale |
| D | 145 | 136 | 139 | 137 | 118 | 106 | 115 | 91 |
| E | 143 | 141 | 138 | 133 | 137 | 131 | 114 | 83 |
| F | 143 | 140 | 105 | 72 | 135 | 125 | 93 | 51 |

TABLEAU VI :

| Essai n° | Etat brut de soudage kV(J) | | | | Etat détensionné kV (J) | | | |
|---|---|---|---|---|---|---|---|---|
| Résiliences à -60°C | | | | | | | | |
| | zones recuites | | zones brutes | | zones recuites | | zones brutes | |
| | moyenne | minimale | moyenne | minimale | moyenne | minimale | moyenne | minimale |
| D | 109 | 85 | 121 | 118 | 98 | 88 | 94 | 82 |
| E | 96 | 69 | 106 | 76 | 88 | 75 | 68 | 53 |
| F | 104 | 88 | 23 | 16 | 66 | 52 | 56 | 40 |

Il apparaît, au vu des Tableaux IV à VI, que plus la teneur en azote du fil fourré diminue, plus sa résilience à basse température (-40°C ou -60°C) augmente et ce, quel que soit l'état de la soudure, à savoir : état brut de soudage ou état détensionné.

En outre, on voit qu'une diminution en niobium et vanadium contribue favorablement à l'obtention d'une soudure de résilience plus élevée à basse température.

Exemple 3

L'exemple 3 est analogue à l'exemple 2, c'est-à-dire qu'il met en oeuvre des fils fourrés présentant de basses teneurs en niobium et vanadium, mais qui ont, cette fois, des teneurs inférieures en silicium (Si) et manganèse (Mn) et, à titre comparatif, des teneurs variables en azote.

Comme précédemment, les teneurs des constituants principaux du métal déposé (soudure) ont été déterminées et sont données dans le Tableau VII ci-après.

TABLEAU VII

| Essai n° | C % | Si % | Mn % | S % | P % | Ni % | Al % | Nb % | V % | Ti % | B ppm | O ppm | N ppm |
|---|---|---|---|---|---|---|---|---|---|---|---|---|---|
| G | 0,068 | 0,25 | 1,16 | 0,008 | 0,010 | 0.69 | 0,003 | 0,006 | 0,009 | 0,033 | 32 | 430 | 41 |
| H | 0,060 | 0,23 | 1,16 | 0,007 | 0,009 | 0,71 | 0,003 | 0,005 | 0,008 | 0,032 | 26 | 450 | 87 |

En outre, les résiliences de chacune des éprouvettes (essais G et H) ont été mesurées à -40°C et sont reportées dans le Tableau VIII suivant.

TABLEAU VIII

| Essai n° | Etat brut de soudage kV(J) | | | | Etat détensionné kV(J) | | | |
|---|---|---|---|---|---|---|---|---|
| | zones recuites | | zones brutes | | zones recuites | | zones brutes | |
| | moyenne | minimale | moyenne | minimale | moyenne | minimale | moyenne | minimale |
| G | 141 | 137 | 136 | 131 | 143 | 138 | 127 | 122 |
| H | 125 | 101 | 65 | 46 | 113 | 105 | 31 | 24 |

Dans ce cas, comme dans les exemples précédents, il apparaît qu'une teneur élevée en azote a une influence néfaste sur les propriétés mécaniques de la soudure tout particulièrement dans les zones brutes, c'est-à-dire ayant conservé une structure brute de solidification, mais aussi dans les zones recuites; dans les zones brutes, l'effet négatif est encore plus marqué pour une forte teneur en azote de la soudure, donc du fil fourré après détensionnement à 580°C.

Exemple 4

Cet exemple 4 a été réalisé au moyen de fils fourrés de type "sans laitier" dont les constituants permettent d'obtenir un métal déposé ayant des teneurs en différents éléments indiqués dans le Tableau IX ci-après. De par la nature du fil, les teneurs en titane du métal déposé sont significativement plus faibles que dans les exemples précédents ce qui est en accord avec le tableau I.

TABLEAU IX

| Essai n° | C % | Si % | Mn % | S % | P % | Ni % | Al % | Nb % | V % | Ti % | B ppm | O ppm | N ppm |
|----------|-----|------|------|-----|-----|------|------|------|-----|------|-------|-------|-------|
| I | 0,03 | 0,38 | 1,63 | 0,011 | 0,010 | 0,026 | 0,004 | 0,002 | 0,008 | 0,013 | 32 | 670 | 50 |
| J | 0,042 | 0,42 | 1,70 | 0,011 | 0,010 | 0,029 | 0,004 | 0,002 | 0.005 | 0,012 | 29 | 683 | 85 |

EP 0 988 130 B1

Les résiliences à moins -40°C des éprouvettes (essais I et J) à l'état brut de soudage ou après détensionnement à 580°C pendant 3 heures sont données dans le Tableau X.

TABLEAU X

| Essai n° | Etat brut de soudage Kv (J) | | | | Etat détensionné Kv (J) | | | |
|---|---|---|---|---|---|---|---|---|
| | zones recuites | | zones brutes | | zones recuites | | zones brutes | |
| | moyenne | minimale | moyenne | minimale | moyenne | minimale | moyenne | minimale |
| I | 101 | 90 | 70 | 58 | 136 | 132 | 123 | 117 |
| J | 47 | 24 | 37 | 22 | 85 | 58 | 78 | 63 |

Comme dans les exemples précédents, on constate qu'un fil fourré présentant une faible teneur en azote conduit à un métal déposé présentant une meilleure résilience à basse température et une meilleure ténacité.

Exemple 5

Cet exemple 5 est analogue à l'exemple 1, et vise à étudier l'influence d'une augmentation de la teneur en aluminium sur les propriétés de ténacité et de résilience de la soudure.

En effet, l'aluminium qui a habituellement une forte affinité pour l'azote, fixe cet élément sous forme de nitrures. On utilise d'ailleurs cette propriété de l'aluminium vis-à-vis de l'azote pour améliorer les capacités de déformation des aciers doux et minimiser les phénomènes de vieillissement dus à la présence d'azote dans le métal.

On utilise dans cet exemple 5, 2 fils fourrés contenant de l'aluminium de sorte que le rapport de la teneur en aluminium à la teneur en azote dans le fil, soit supérieur à 4 (rapport $Al/N_2 > 4$).

Comme précédemment, les teneurs des constituants principaux du métal déposé (soudure) ont été déterminées et sont données dans le Tableau XI ci-après.

TABLEAU XI

| Essai n° | C % | Si % | Mn % | S % | P % | Ni % | Al % | Nb % | V % | Ti % | B ppm | O ppm | N ppm |
|---|---|---|---|---|---|---|---|---|---|---|---|---|---|
| K | 0,069 | 0.41 | 1.07 | 0.005 | 0,006 | 0.58 | 0,029 | 0.015 | 0,016 | 0.10 | 20 | 670 | 42 |
| L | 0,068 | 0,42 | 1,13 | 0,004 | 0,006 | 0,7 | 0,031 | 0,014 | 0,016 | 0,088 | 16 | 750 | 76 |

En outre, les résiliences des éprouvettes (essais K et L) ont été mesurées à -40°C à l'état brut de soudage ou après détensionnement à 580°C pendant 3 heures et sont données dans le Tableau XII ci-après:

TABLEAU XII

| Essai n° | Etat brut de soudage Kv (J) | | | | Etat détensionné Kv (J) | | | |
|---|---|---|---|---|---|---|---|---|
| | zones recuites | | zones brutes | | zones recuites | | zones brutes | |
| | moyenne | minimale | moyenne | minimale | moyenne | minimale | moyenne | minimale |
| K | 55 | 46 | 16 | 12 | 37 | 30 | 13 | 11 |
| L | 74 | 54 | 50 | 30 | 40 | 26 | 24 | 17 |

On constate, de façon surprenante, qu'une augmentation de la teneur en aluminium à une influence négative sur les propriétés de ténacité et de résilience de la soudure à basse température, ce qui est en totale opposition avec les observations qui avaient pu être faites jusqu'alors.

Cette influence négative de l'aluminium peut s'expliquer par le fait que l'aluminium interfère dans les réactions d'oxydoréduction et, de ce fait, modifie profondément les transferts en éléments actifs, tels notamment le titane et le silicium.

Il en résulte que pour améliorer les propriétés de ténacité et de résilience de la soudure, il faut veiller, d'une part, à ce que la teneur totale en azote du fil fourré soit inférieure à 65 ppm et, d'autre part, que le rapport Al/N$_2$ soit inférieur à 4, voire même inférieur ou égal à 3.

Exemple 6

Cet exemple est analogue aux exemples précédents. Les essais ci-après ont été réalisés, comme précédemment, en mettant en oeuvre un générateur de courant STARMATIC de type 502 TRA-CC+ pour une intensité de courant de 250 A, une tension de 27 V, une vitesse de soudage de 23 cm.min$^{-1}$ et une température entre les passes de 150°C.

Le gaz de protection utilisé est un mélange ATAL 5A™ (argon +18% CO$_2$) et le débit de gaz est d'environ 20 l.min$^{-1}$.

Les dépôts de métal fondu ont été exécutés au moyen de 3 fils fourrés ayant un diamètre de 1.2 mm fabriqués sur la même base de formule que ceux des exemples 2, 3 et 5 (fils rutiles), mais se distinguant essentiellement par leurs teneurs totales en aluminium, à savoir :

- essai M: fil contenant environ 0.010% d'Al,
- essai N : fil contenant environ 0.20% d'Al,
- essai O : fil contenant environ 0.29% d'Al.

Des éprouvettes de résilience ont été prélevées dans les zones recuites et, à titre comparatif, dans les zones brutes de soudage ayant conservé une structure brute de solidification.

Les résiliences sont mesurées à -40°C à l'état brut de soudage et après traitement thermique post-soudage (détensionnement à 580°C pendant 3 h) et les résultats sont données dans le tableau XIII ci-après.

TABLEAU XIII

| Essai n° | Etat brut de soudage kV (en J) | | | | | | Etat après traitement thermique(*) (en J) | | | | | |
|---|---|---|---|---|---|---|---|---|---|---|---|---|
| | zones brutes | | | zones recuites | | | zones brutes | | | zones recuites | | |
| M | 150 | 155 | 157 | 150 | 155 | 169 | 121 | 130 | 151 | 144 | 144 | 149 |
| N | 96 | 100 | 113 | 103 | 117 | 127 | 70 | 70 | 85 | 82 | 93 | 105 |
| O | 40 | 42 | 61 | 14 | 14 | 31 | 10 | 18 | 30 | 14 | 17 | 25 |

(*) : traitement thermique : chauffage (50°C/h), maintien à 580°C pendant 3 h, puis refroidissement (50°C/h).

Ensuite, les teneurs des constituants du métal déposé ont été déterminées et sont données dans le tableau XIV ci-après.

## TABLEAU XIV

| Essai n° | C % | Si % | Mn % | S % | P % | Ni % | Al % | Nb % | V % | Ti % | B ppm | O ppm | N ppm |
|---|---|---|---|---|---|---|---|---|---|---|---|---|---|
| M | 0,068 | 0,33 | 1,41 | 0,004 | 0,006 | 0,75 | 0,003 | 0,006 | 0,009 | 0,037 | 38 | 410 | 42 |
| N | 0,070 | 0,39 | 1,53 | 0,004 | 0,005 | 0,74 | 0,011 | 0,007 | 0,008 | 0,076 | 46 | 520 | 43 |
| O | 0,069 | 0,41 | 1,58 | 0,004 | 0,005 | 0,77 | 0,015 | 0,007 | 0,007 | 0,092 | 52 | 550 | 38 |

| Essai n° | As % | Cr % | Mo % | Cu % | Co % | Sn % | Sb % | Rapport Al/N |
|---|---|---|---|---|---|---|---|---|
| M | 0,003 | 0,031 | 0,002 | 0,011 | 0,004 | 0,002 | 0,002 | 0,71 |
| N | 0,003 | 0,03 | 0,001 | 0,011 | 0,004 | 0,002 | 0,002 | 2,56 |
| O | 0,003 | 0,03 | 0,001 | 0,010 | 0,004 | 0,002 | 0,002 | 3,95 |

Afin d'évaluer les propriétés mécaniques des joints de soudure obtenus, à l'état brut de soudage ou après traitement thermique, ceux-ci sont soumis à des mesures de traction. Les résultats sont donnés dans le tableau XV ci-après.

TABLEAU XV

| | Etat brut de soudage | | | Etat après traitement thermique | | |
|---|---|---|---|---|---|---|
| Essais n° | M | N | O | M | N | O |
| Charge à la rupture Rm (MPa) | 598 | 647 | 749 | 565 | 628 | 706 |
| Limite d'élasticité Rp 0.2 (MPa) | 510 | 574 | 670 | 473 | 544 | 638 |
| Allongement (%) | 25 | 22 | 19 | 29 | 27 | 21 |
| Striction (%) | 75.3 | 69 | 65 | 75 | 73 | 69 |

Les résultats obtenus montrent clairement que l'augmentation de la teneur en aluminium du métal déposé jusqu'à 0.011% dans le dépôt conduit à des résultats de résilience qui restent acceptables à -40°C dans toutes les zones de la soudure à l'état brut de soudage comme après traitement thermique post-soudage.

Au-delà de cette valeur, on assiste à une chute très marquée de valeurs de résilience dans toutes les zones de la soudure, en particulier après traitement thermique post-soudage.

Parallèlement à cette évolution de la ténacité, on voit une augmentation de la résistance à la rupture et de la limite d'élasticité et une baisse des caractéristiques de ductilité (allongement et striction).

L'utilisation de fils fourrés selon l'invention, en particulier de type rutile ou sans laitier, permet d'obtenir dans la zone fondue du joint soudé, d'excellentes propriétés de ténacité à basse température, c'est-à-dire jusqu'à des températures de l'ordre de -50°C à -60°C et ce, tant à l'état brut de soudage qu'après un traitement thermique subséquent, en particulier, lorsque la teneur totale en azote du fil est inférieure à 65 ppm et le rapport de la teneur en aluminium à la teneur en azote est inférieur à 3.

## Revendications

1. Fil fourré pour le soudage sous flux gazeux de protection comportant au moins une enveloppe métallique externe et au moins une âme centrale comprenant des éléments de remplissage, et contenant par rapport au poids total dudit fil :

- de l'azote en une teneur de moins de 75 ppm,
- de 0.20 % à 1 % de silicium,
- de 1 % à 2.5 % de manganèse,
- moins de 7% de titane,
- de 1 ppm à 110 ppm de bore,
- moins de 0.3% d'aluminium,
- de 10 ppm à 200 ppm de niobium, et
- de 10 ppm à 200 ppm de vanadium.

2. Fil fourré selon la revendication 1, **caractérisé en ce qu'**il contient, en outre :

- de 300 ppm à 0.14 % de carbone,
- de 0.2% à 1% de magnésium et/ou zirconium, et/ou
- de 0.01% à 0.35% de sodium, potassium et/ou lithium, et/ou
- de 0.03% à 10% de fluor, et/ou
- moins de 0.02% de soufre, de phosphore, d'étain, d'antimoine et/ou d'arsenic.

3. Fil fourré selon l'une des revendications 1 ou 2, **caractérisé en ce qu'**il présente un coefficient de Bruscato (X) tel que :

$$X = 0.1 \times [P] + 0.05 \times [Sb] + 0.04 \times [As] + 0.01 \times [Sn]$$

avec X < 20 ppm
où [P], [Sb], [As] et [Sn] sont les proportions totales (en ppm) de phosphore, antimoine, arsenic et étain, respectivement, dans le fil fourré.

4. Fil fourré selon l'une des revendications 1 à 3, **caractérisé en ce que** l'enveloppe externe représente au moins 50% du poids total du fil fourré, de préférence de 71 à 90% du poids total du fil.

5. Fil fourré selon l'une des revendications 1 à 4, **caractérisé en ce qu'**il a un diamètre compris entre 0.8 mm et 2.4 mm, de préférence entre 1 et 2 mm.

6. Fil fourré selon l'une des revendications 1 à 5, **caractérisé en ce qu'**il est choisi parmi les fils de type "rutile" ou de type "sans laitier".

7. Procédé de soudage MAG sous flux gazeux de protection, dans lequel on réalise un joint de soudure par fusion d'au moins une partie d'un fil fourré selon l'une des revendications 1 à 6, de préférence la fusion du fil est obtenue par mise en oeuvre d'une énergie de soudage comprise entre 6 et 40 kJ.cm$^{-1}$.

8. Joint de soudure susceptible d'être obtenu par fusion d'au moins une partie d'un fil fourré selon l'une des revendications 1 à 6 et/ou par mise en oeuvre d'un procédé selon la revendication 7, et contenant par rapport au poids de la soudure :

- de l'azote en une teneur de moins de 80 ppm,
- de 0.02 % à 0.07 % d'oxygène,
- de 0.02% à 0.12 % de carbone,
- de 0.15 % à 0.6 % de silicium,
- de 1 % à 1,9 % de manganèse,
- moins de 0.02 % de soufre,
- moins de 0.02 % de phosphore,
- de 0.0025 % à 0.08 % de titane,
- de 3 ppm à 80 ppm de bore,
- moins de 0.03 % d'aluminium,
- de 10 ppm à 0.02 % de niobium, et

-   de 10 ppm à 0.02 % de vanadium.

9.  Joint de soudure selon la revendication 8, **caractérisé en ce qu'**il contient :

    -   moins de 60 ppm d'azote, et/ou
    -   au plus 0.06% d'oxygène, et/ou
    -   moins de 150 ppm d'aluminium, et/ou
    -   moins de 100 ppm de niobium, et/ou
    -   moins de 100 ppm de vanadium, et/ou
    -   de 10 ppm à 70 ppm de bore, et/ou
    -   moins de 100 ppm de soufre, et/ou
    -   moins de 100 ppm de phosphore.

10. Joint de soudure selon l'une des revendications 8 ou 9, **caractérisé en ce qu'**il contient :

    -   moins de 50 ppm d'azote, et/ou
    -   au plus 0.055% d'oxygène, et/ou
    -   moins de 100 ppm d'aluminium, et/ou
    -   de 20 ppm à 60 ppm de bore.

11. Joint de soudure selon l'une des revendications 8 à 10, **caractérisé en ce qu'**il comporte, en outre :

    -   moins de 3.5% de nickel,
    -   moins de 0.5% de chrome et, de préférence, moins de 0.3%.
    -   moins de 0.7% de molybdène,
    -   moins de 0.6% de cuivre.

12. Joint de soudure selon l'une des revendications 8 à 11, **caractérisé en ce que** le rapport (Al/N) de la teneur en aluminium à la teneur en azote dans ledit joint est inférieure à 3, de préférence inférieure ou égale à 2.

13. Joint de soudure selon l'une des revendications 8 à 12, **caractérisé en ce qu'**il comporte du phosphore, de l'antimoine, de l'arsenic et/ou de l'étain et **en ce qu'**il présente un coefficient de Bruscato (X) tel que :

$$X = 0.1 \times [P] + 0.05 \times [Sb] + 0.04 \times [As] + 0.01 \times [Sn]$$

avec X < 20 ppm, de préférence X < 15 ppm,
où [P], [Sb], [As] et [Sn] sont les proportions totales (en ppm) de phosphore, antimoine, arsenic et étain, respectivement, dans ledit joint de soudure.

14. Pièce en acier comportant un joint de soudure selon l'une des revendications 8 à 13.

15. Utilisation d'un fil fourré selon l'une des revendications 1 à 6 pour la réalisation d'au moins un joint de soudure selon l'une des revendications 8 à 13 sur une construction en acier choisie dans le groupe formé par une installation pétrolière, notamment une cuve de stockage ou une plate-forme off-shore, une structure de pont ou de bateau.

**Claims**

1.  Flux-cored wire for gas-shielded welding, composed of at least one outer metal sheath and at least one central core comprising filling elements, and containing, with respect to the total weight of the said wire:

    -   nitrogen with a content of less than 75 ppm,
    -   from 0.20% to 1% silicon,
    -   from 1% to 2.5% manganese,
    -   less than 7% titanium,
    -   from 1 ppm to 110 ppm boron,
    -   less than 0.3% aluminium,

- from 10 ppm to 200 ppm niobium, and
- from 10 ppm to 200 ppm vanadium.

2. Flux-cored wire according to Claim 1, **characterized in that** it furthermore contains:

- from 300 ppm to 0.14% carbon,
- from 0.2% to 1% magnesium and/or zirconium, and/or
- from 0.01% to 0.35% sodium, potassium and/or lithium, and/or
- from 0.03% to 10% fluorine, and/or
- less than 0.02% sulphur, phosphorus, tin, antimony and/or arsenic.

3. Flux-cored wire according to either of Claims 1 and 2, **characterized in that** it has a Bruscato coefficient (X) such that:

$$X = 0.1 \times [P] + 0.05 \times [Sb] + 0.04 \times [As] + 0.01 \times [Sn]$$

with X < 20 ppm,
where [P], [Sb], [As] and [Sn] are the total amounts (in ppm) of phosphorus, antimony, arsenic and tin, respectively, in the flux-cored wire.

4. Flux-cored wire according to one of Claims 1 to 3, **characterized in that** the outer sheath represents at least 50% of the total weight of the flux-cored wire, preferably from 71 to 90% of the total weight of the wire.

5. Flux-cored wire according to one of Claims 1 to 4, **characterized in that** it has a diameter of between 0.8 mm and 2.4 mm, preferably between 1 and 2 mm.

6. Flux-cored wire according to one of Claims 1 to 5, **characterized in that** it is chosen from among the "rutile"-type or "slag-free"-type wires.

7. MAG gas-shielded welding process, in which a welded joint is produced by melting at least part of a flux-cored wire according to one of Claims 1 to 6 - preferably the wire is melted by supplying a welding energy of between 6 and 40 kJ.cm$^{-1}$.

8. Welded joint which can be obtained by melting at least part of a flux-cored wire according to one of Claims 1 to 6 and/or by implementing a process according to Claim 7, and containing, with respect to the weight of the weld:

- nitrogen with a content of less than 80 ppm,
- from 0.02% to 0.07% oxygen,
- from 0.02% to 0.12% carbon,
- from 0.15% to 0.6% silicon,
- from 1% to 1.9% manganese,
- less than 0.02% sulphur,
- less than 0.02% phosphorus,
- from 0.0025% to 0.08% titanium,
- from 3 ppm to 80 ppm boron,
- less than 0.03% aluminium,
- from 10 ppm to 0.02% niobium, and
- from 10 ppm to 0.02% vanadium.

9. Welded joint according to Claim 8, **characterized in that** it contains:

- less than 60 ppm nitrogen, and/or
- at most 0.06% oxygen, and/or
- less than 150 ppm aluminium, and/or
- less than 100 ppm niobium, and/or

- less than 100 ppm vanadium, and/or
- from 10 ppm to 70 ppm boron, and/or
- less than 100 ppm sulphur, and/or
- less than 100 ppm phosphorus.

10. Welded joint according to either of Claims 8 and 9, **characterized in that** it contains:

- less than 50 ppm nitrogen, and/or
- at most 0.055% oxygen, and/or
- less than 100 ppm aluminium, and/or
- from 20 ppm to 60 ppm boron.

11. Welded joint according to one of Claims 8 to 10, **characterized in that** it furthermore includes:

- less than 3.5% nickel,
- less than 0.5% chromium and, preferably, less than 0.3%,
- less than 0.7% molybdenum, and
- less than 0.6% copper.

12. Welded joint according to one of Claims 8 to 11, **characterized in that** the ratio (Al/N) of the aluminium content to the nitrogen content in the said joint is less than 3, preferably less than or equal to 2.

13. Welded joint according to one of Claims 8 to 12, **characterized in that** it includes phosphorus, antimony, arsenic and/or tin and **in that** it has a Bruscato coefficient (X) such that:

$$X = 0.1 \times [P] + 0.05 \times [Sb] + 0.04 \times [As] + 0.01 \times [Sn]$$

with X < 20 ppm and preferably X < 15 ppm,
where [P], [Sb], [As] and [Sn] are the total amounts (in ppm) of phosphorus, antimony, arsenic and tin, respectively, in the said welded joint.

14. Steel component having a welded joint according to one of Claims 8 to 13.

15. Use of a flux-cored wire according to one of Claims 1 to 6 for producing at least one welded joint according to one of Claims 8 to 13 on a structural steel, chosen from the group formed by an oil facility, in particular a storage tank or an offshore platform, a bridge structure or a ship structure.

**Patentansprüche**

1. Fülldraht für das Schutzgasschweißen, der sich aus mindestens einem Metallaußenmantel und mindestens einer Füllelemente enthaltenden zentralen Seele zusammensetzt und, bezogen auf das Gesamtgewicht des Drahts:

- Stickstoff in einer Menge von weniger als 75 ppm,
- 0,20% bis 1% Silicium,
- 1% bis 2,5% Mangan,
- weniger als 7% Titan,
- 1 ppm bis 110 ppm Bor,
- weniger als 0,3% Aluminium,
- 10 ppm bis 200 ppm Niob und
- 10 ppm bis 200 ppm Vanadium

enthält.

2. Fülldraht nach Anspruch 1, **dadurch gekennzeichnet, daß** er außerdem auch noch:

- 300 ppm bis 0,14% Kohlenstoff,

23

- 0,2% bis 1% Magnesium und/oder Zirconium und/oder
- 0,01% bis 0,35% Natrium, Kalium und/oder Lithium und/oder
- 0,03% bis 10% Fluor und/oder
- weniger als 0,2% Schwefel, Phosphor, Zinn, Antimon und/oder Arsen

enthält.

3. Fülldraht nach Anspruch 1 oder 2, **dadurch gekennzeichnet, daß** er einen solchen Bruscato-Koeffizienten (X) aufweist, **daß**:

$$X = 0{,}1 \times [P] + 0{,}05 \times [Sb] + 0{,}04 \times [As] + 0{,}01 \times [Sn]$$

mit X < 20 ppm,
wobei [P], [Sb], [As] und [Sn] für die Gesamtgehalte (in ppm) an Phosphor, Antimon, Arsen bzw. Zinn im Fülldraht stehen.

4. Fülldraht nach einem der Ansprüche 1 bis 3, **dadurch gekennzeichnet, daß** der Außenmantel mindestens 50 Gew.-% des Gesamtgewichts des Fülldrahts, vorzugsweise 71 bis 90 Gew.-% des Drahts, ausmacht.

5. Fülldraht nach einem der Ansprüche 1 bis 4, **dadurch gekennzeichnet, daß** er einen Durchmesser zwischen 0,8 mm und 2,4 mm, vorzugsweise zwischen 1 und 2 mm, aufweist.

6. Fülldraht nach einem der Ansprüche 1 bis 5, **dadurch gekennzeichnet, daß** er unter Rutildrähten oder schlak-kefreien Drähten ausgewählt ist.

7. Verfahren zum MAG-Schweißen unter Schutzgas, bei dem man durch Aufschmelzen von mindestens einem Teil eines Fülldrahts nach einem der Ansprüche 1 bis 6 eine Schweißverbindung herstellt, wobei das Aufschmelzen des Fülldrahts vorzugsweise durch Zufuhr einer Schweißenergie zwischen 6 und 40 kJ.cm$^{-1}$ erfolgt.

8. Durch Aufschmelzen von mindestens einem Teil eines Fülldrahts nach einem der Ansprüche 1 bis 6 und/oder Anwendung eines Verfahrens nach Anspruch 7 erhältliche Schweißverbindung, die, bezogen auf das Gewicht der Schweißnaht:

- Stickstoff in einer Menge von weniger als 80 ppm,
- 0,02% bis 0,07% Sauerstoff,
- 0,02% bis 0,12% Kohlenstoff,
- 0,15% bis 0,6% Silicium,
- 1% bis 1,9% Mangan,
- weniger als 0,02% Schwefel,
- weniger als 0,02% Phosphor,
- 0,0025% bis 0,08% Titan,
- 3 ppm bis 80 ppm Bor,
- weniger als 0,03% Aluminium,
- 10 pm bis 0,02% Niob und
- 10 ppm bis 0,02% Vanadium

enthält.

9. Schweißverbindung nach Anspruch 8, **dadurch gekennzeichnet, daß** sie:

- weniger als 60 ppm Stickstoff und/oder
- höchstens 0,06% Sauerstoff und/oder
- weniger als 150 ppm Aluminium und/oder
- weniger als 100 ppm Niob und/oder
- weniger als 100 ppm Vanadium und/oder
- 10 ppm bis 70 ppm Bor und/oder
- weniger als 100 ppm Schwefel und/oder

- weniger als 100 ppm Phosphor

enthält.

10. Schweißverbindung nach Anspruch 8 oder 9, **dadurch gekennzeichnet, daß** sie:

- weniger als 50 ppm Stickstoff und/oder
- höchstens 0,055% Sauerstoff und/oder
- weniger als 100 ppm Aluminium und/oder
- 20 ppm bis 60 ppm Bor

enthält.

11. Schweißverbindung nach einem der Ansprüche 8 bis 10, **dadurch gekennzeichnet, daß** sie außerdem auch noch:

- weniger als 3,5% Nickel,
- weniger als 0,5% Chrom und vorzugsweise weniger als 0,3%,
- weniger als 0,7% Molybdän, und
- weniger als 0,6% Kupfer.

enthält.

12. Schweißverbindung nach einem der Ansprüche 8 bis 11, **dadurch gekennzeichnet, daß** das Verhältnis von Aluminiumgehalt zu Stickstoffgehalt (Al/N) in der Verbindung kleiner als 3, vorzugsweise kleiner gleich 2, ist.

13. Schweißverbindung nach einem der Ansprüche 8 bis 12, **dadurch gekennzeichnet, daß** sie Phosphor, Antimon, Arsen und/oder Zinn enthält und einen solchen Bruscato-Koeffizienten (X) aufweist, **daß**:

$$X = 0,1 \times [P] + 0,05 \times [Sb] + 0,04 \times [As] + 0,01 \times [Sn]$$

mit X < 20 ppm, vorzugsweise X < 15 ppm,
wobei [P], [Sb], [As] und [Sn] für die Gesamtgehalte (in ppm) an Phosphor, Antimon, Arsen bzw. Zinn in der Schweißverbindung stehen.

14. Stahlteil mit einer Schweißverbindung nach einem der Ansprüche 8 bis 13.

15. Verwendung eines Fülldrahts nach einem der Ansprüche 1 bis 6 zur Herstellung von mindestens einer Schweißverbindung nach einem der Ansprüche 8 bis 13 an einer Stahlkonstruktion, ausgewählt aus der Gruppe bestehend aus einer erdöltechnischen Anlage, insbesondere einem Lagerbehälter oder einer Offshore-Plattform, einer Brükken- oder einer Schiffskonstruktion.

FIG. 1

FIG. 2

FIG. 3